# EUROPEAN PATENT APPLICATION

(11) **EP 2 963 876 A1**
(43) Date of publication of application: **06.01.2016**
(21) Application number: 13876245.5
(22) Date of filing: 14.11.2013
(51) Int. Cl.: H04L 12/823

(54) **METHOD FOR PREVENTING REPEATED USE OF DIGITAL PACKET DATA**

(30) Priority: 26.02.2013 RU 2013108211
(71) Applicant: Joint Stock Company "Infotecs", Moscow 127287 (RU)
(72) Inventor: TYCHINA, Leonid Anatolievich, Moscow 119620 (RU)
(74) Representative: Bongiovanni, Simone
(86) International application number: PCT/RU2013/001012
(87) International publication number: WO 2014/133411

(57) **Abstract**

A method of preventing reuse of digital data packets in a network data transmission system, the method being executed by a system including computers connected via the network data transmission system, the computers sending and receiving messages as a sequence of digital data packets, the method comprising: generating payload data and metadata for each packet to be sent, as well as data for checking integrity of the metadata, the metadata including a serial number of the packet, a sending time of the data packet; sending the packet over the data transmission network; specifying an allowable value of a mismatch time interval; providing, in memory, areas to store a sending time of a last received packet, a serial number of the last received packet, a list of serial numbers of previously received packets; receiving the packet including the payload data and the metadata; checking for reuse of the received packet by checking whether the sending time of the received packer is outside the mismatch time interval and whether the number of the received packet matches the number of the last received packet or numbers in the list of serial numbers of previously received packets; and, based on results of the check, accepting or discarding the packet.

## Description

### Technical Field

The present invention relates to methods for providing security in data transmission networks and, in particular, to methods for preventing reuse of digital data packets in transmissions over data networks.

### Background of the Invention

A data transmission network that uses data packets, e.g. in accordance with IP, can use various protocols to ensure security of IP networks, e.g. IPsec [1, 2].

IPsec provides a technique of preventing reuse (Anti-replay) of digital data packets in the process of an established connection between computers on a network. This method comprises: automatically numbering transmitted packets upon establishing a connection; inserting a number of a transmitted packet into a standard packet header; and taking into account numbers of received packets.

Upon reception of a next packet, a computer that receives messages searches for a number of the received packet in a list of previously received packets, and, if the packet has been received previously, then it is discarded. However, if the packet has not been previously received, its number is entered into the list, and the packet is accepted and processed.

When encrypted packets are received, decryption and integrity check operations are preliminarily applied.

Disadvantages of this method include the need for a protocol to match counters and, as a consequence, the need for two-way confirmation of the fact that the connection is establishment.

Another known method for preventing reuse of digital data packets in a network data transmission system [3] is executed by a system comprising:
- computers that send messages as a sequence of digital data packets over a data transmission network, and
- computers that receive the messages and are connected with other computers via the data transmission network;
the method comprising the steps of:
- generating payload data for each packet to be sent;
- generating metadata for each packet to be sent, wherein the metadata includes a data packet sending time (timestamp, pseudo-time stamp);
- generating a packet, the packet including the payload data and the metadata;
- encrypting the packet together with the metadata;
- sending the packet over the data transmission network by a message sending computer;
- specifying, at a message receiving computer, an allowable value of a mismatch time interval;
- receiving the packet including the payload data and the metadata;
- decrypting the packet along with the metadata including the data packet sending time;
- checking integrity of the metadata of the received packet using metadata integrity check data;
- checking for reuse of the received packet by performing the following steps:
   o if the sending time of the received packet is outside the mismatch time interval, discarding the packet;
   o if the sending time of the packet is within the mismatch time period, accepting the packet for further processing.

A built-in (local) clock or a value received from an external server can be used to generate the data packet sending time in the message sending computer.

A built-in (local) clock can be used to control the data packet sending time in the message receiving computer.

The described method has been chosen as the most relevant prior art.

The aforementioned disadvantages are not typical to said method, but it requires precise time synchronization between communication nodes. In particular, if time synchronization is insufficiently precise, a greater interval of allowable deviation of the received timestamp from the current time in the message receiving computer is required, thereby resulting in a great amount of data that can be repeatedly transmitted to said computer. For example, if the allowable deviation time interval value is 1 s and the backbone channel having throughput of 1 Gb/s is used for data transmission, then the amount of retransmitted traffic will reach the value of 1 Gb, which may turn out to be unacceptable.

The need for precise time synchronization between computers that send and receive messages is the disadvantage of the prior art method that prevents from reliable elimination of repeated reception of packets within the specified mismatch time interval.

### Disclosure of the Invention

The object of the invention is to prevent (obviate) repeated reception of packets within a specified mismatch time interval.

Another object is to eliminate the necessity of the two-way confirmation of connection establishment.

To this end, a method is provided that is executed by a system comprising:
- computers that send messages as a sequence of digital data packets via a data transmission network, and
- computers that receive the messages and are connected with other computers via the data transmission network;
the method comprising:
- generating payload data for each packet to be sent;
- generating metadata for each packet to be sent, wherein the metadata includes
   o a serial number of the packet;
   o a sending time of the data packet;
- generating a packet, the packet including:
   o the payload data,
   o the metadata, and
   o data for checking integrity of the metadata;
- sending the packet over the data transmission network;
- specifying, at a message receiving computer, an allowable value of a mismatch time interval;
- providing, in computer memory, areas for storing:
   o a sending time of a last received packet;
   o a serial number of the last received packet;
   o a list of serial numbers of previously received packets;
- receiving the packet including the payload data and the metadata;
- checking integrity of the metadata of the received packet using the metadata integrity check data;
- checking for reuse of the received packet by performing the following steps:
   o if the sending time of the received packet is outside the mismatch time interval, then discarding the packet;
   o if the sending time of the packet is within the mismatch time interval, then
      ▪ comparing the sending time of the received packet with the sending time of the last received packet;
      ▪ if the sending time of the received packet is greater than the sending time of the last received packet,
         □ replacing the sending time of the last received packet with the sending time of the received packet;
         □ replacing the number of the last received packet with the number of the received packet;
         □ entering the number of the received packet into the list of serial numbers of previously received packets;
         □ accepting the packet;
      ▪ if the sending time of the received packet is not greater than the sending time of the last received packet,
      ▪ comparing the number of the last received packet with the number of the received packet;
      ▪ if the number of the last received packet is less than number of the received packet,
         □ replacing the number of the last received packet with the number of the received packet;
         □ entering the number of the received packet into the list of serial numbers of previously received packets;
         □ accepting the packet;
      ▪ if the number of the last received packet is greater than or equal to the number of the received packet,
         □ searching for the number of the received packet in the list of serial numbers of previously received packets;
         □ if the number of the received packet has been found in the list of serial numbers of the previously received packets, discarding the received packet;
         □ if the number of the received packet has not been found in the list of serial numbers of previously received packets,
            ◆ entering the number of the received packet into the list of serial numbers of previously received packets, and
            ◆ accepting the received packet.

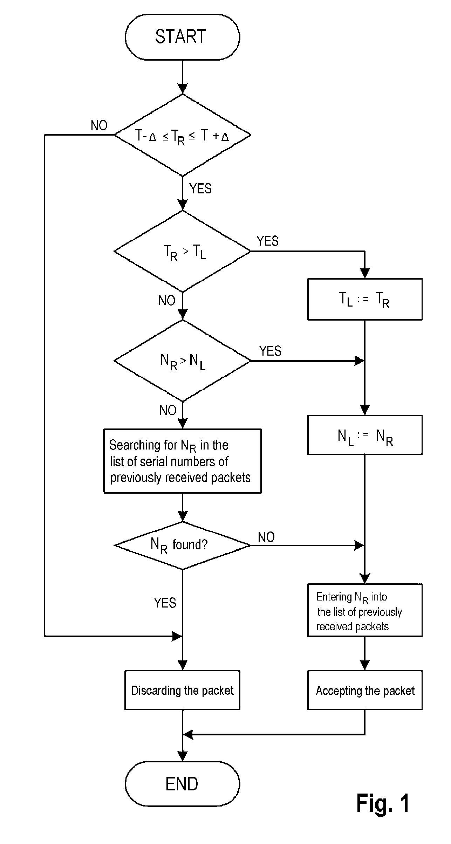

The process of checking for reuse of the received packet is illustrated by a schematic diagram shown in the attached drawing.

The schematic diagram uses the following notations:
T - current time;
Δ - mismatch time interval value;
T_{R} - sending time of received packet;
N_{R} - number of received packet;
T_{L} - time of last received packet;
N_{L} - number of last received packet.

Unlike the most relevant prior art, the present method further uses the received packet number.

This allows to successfully avoid reuse of a packet in cases where, in particular, a timestamp is insufficiently precise, and timestamps of multiple packets match; this condition also enables to receive packets in the situation where the message sending computer has adjusted the time back.

Furthermore, while transmitting data over a network, data packets may be mixed with respect to their sequence order, therefore, the present method allows to control, by using the list of received packets, reception of data packets with lower serial numbers than earlier received data packets.

As a result, repeated reception of packets is prevented within the specified mismatch time interval.

The presence of a timestamp allows to avoid the two-way confirmation of connection establishment. For example, let us consider the most unfavorable case for the method. If, for any reason, a source has reset a counter of outgoing packets to zero and adjusted the time back within the mismatch time interval, then a recipient will start to receive packets not later than after 2Δ (as the limiting case), since the very first packet for which T_{R} > T_{L} is true will transfer information about the source to an actual state. Furthermore, if only the counter resetting or only the time adjustment occurs, the recipient will be still able to receive packets from the source.

### Brief Description of the Drawings

The attached figure shows a flow chart explaining the process of checking for reuse of a received packet.

### Description of Embodiment

Let us consider the exemplary execution of the present method in a network for a computer system which includes computers that send messages as a sequence of digital data packets via a data transmission network, and computers that receive the messages and are connected with other computers via the data transmission network.

Software that enables to perform steps of the present method can comprise customized (modified) programs or functions within standard networking software.

Computers on the network can operate under a general purpose operating system (OS), such as Microsoft Windows 7.

Communication between a sender and a recipient can be organized using UDP, where the UDP datagram body has the format explained in the Table below.

| | | | |
|---|---|---|---|
| ←8 bytes→ | ←8 bytes→ | ←8 bytes→ | ←0 and more bytes→ |
| Serial number | Sending time | Authentication code | Payload |

The datagram uses the following parameters.

Serial number is a 64 bit number generated by the sender.

Sending time is a time encoded into a 64 bit number, e.g. Unix time.

Authentication code is data for checking integrity, e.g. in accordance with the Russian State Standard (RuSS) 28147-89. The integrity check can be performed for the entire packet (with the "Authentication Code" field set to 0) and/or only for the metadata (serial number, sending time).

Payload is data which the reuse prevention mechanism is to be applied to.

In order to directly use the present method, appropriate software modules are loaded onto computers in the network with a preliminarily determined and entered value of Δ (the mismatch time interval value).

The mismatch time interval value is determined based on the desired communication recovery time between the sender and the recipient and the acceptable difference between the local clocks at the sender and the recipient. For most cases, Δ = 5 minutes would be acceptable.

A software module provides a memory area for a counter of serial numbers of packets to be sent. For each sender from which packets will be received a memory area is provided to store a sending time of a last received packet, a serial number of the last received packet, and a list of serial numbers of previously received packets. The list of serial numbers of previously received packets can be arranged in the form of a bit array, for example, as proposed in the IPsec specification [1, 2].

Then, a software module of the sender generates a packet including: payload data, a serial number, a sending time, an authentication code. The "Serial Number" field stores the value of the counter of serial numbers of packets to be sent, the counter value is then incremented by one. The "Sending Time" field contains the time value at the instant of sending. The "Authentication Code" field contains the authentication code value calculated by RuSS 28147-89 for the metadata (serial number, sending time).

A software module of the recipient receives the packet, and checks integrity of the metadata by using the authentication code. If the authentication code value calculated in the receiving computer does not match the value contained in the packet, then the packet is discarded. If the authentication code value matches, then the check for reuse is performed.

The check for reuse of the received packet comprises the following steps:
o if the sending time of the received packet is outside the mismatch time interval value, then the packet is discarded;
o if the packet sending time is within the mismatch time interval value,
   ▪ the sending time of the received packet is compared with the sending time of the last received packet;
   ▪ if the sending time of the received packet is greater than the sending time of the last received packet,
      □ the sending time of the last received packet is replaced with the sending time of the received packet;
      □ the number of the last received packet is replaced with the number of the received packet;
      □ the number of the received packet is entered into the list of serial numbers of previously received packets;
      □ the packet is accepted;
   ▪ if the sending time of the received packet is not greater than the sending time of the last received packet,
   ▪ the number of the last received packet is compared with the number of received packet;
   ▪ if the number of the last received packet is less than number of the received packet,
      □ the number of the last received packet is replaced with the number of the received packet;
      □ the number of the received packet is entered into the list of serial numbers of previously received packets;
      □ the packet is accepted;
   ▪ if the number of the last received packet is greater than or equal to the number of the received packet,
      □ the number of the received packet is searched for in the list of serial numbers of previously received packets;
      □ if the number of the received packet has been found in the list of serial numbers of previously received packets, the received packet is discarded;
      □ if the number of the received packet has not been found in the list of serial numbers of previously received packets,
         ◆ the number of the received packet is entered into the list of serial numbers of previously received packets, and
         ◆ the received packet is accepted.

It should be noted that other embodiments of the present method are possible that are different from the one described above and that may depend on personal preferences when programming individual actions and functions.

### Citation list:

1. RFC 4302 - IP Identification Header, 2005, http://rfc2.ru/4302.rfc
2. RFC 4303 - Encapsulation of Protected IP Data (ESP), http://rfc2.ru/4303.rfc
3. US 2008/0260151

## Claims

1. A method of preventing reuse of digital data packets in a network data transmission system, the method being performed by a system comprising:
computers that send messages as a sequence of digital data packets via a data transmission network, and
computers that receive the messages and are connected with other computers via the data transmission network;
the method comprising:
generating payload data for each packet to be sent;
generating metadata for each packet to be sent, the metadata including:
a serial number of the packet,
a sending time of the data packet;
generating a packet, the packet including:
the payload data,
the metadata, and
data for checking integrity of the metadata;
sending the packet over the data transmission network;
specifying, at a message receiving computer, an allowable value of a mismatch time interval;
providing, in computer memory, areas for storing:
a sending time of a last received packet,
a serial number of the last received packet,
a list of serial numbers of previously received packets;
receiving the packet including the payload data and the metadata;
checking integrity of the metadata of the received packet by using the metadata integrity check data;
checking for reuse of the received packet by performing the following steps:
if the sending time of the received packet is outside the mismatch time interval, then discarding the packet;
if the sending time of the packet is within the mismatch time interval, then
comparing the sending time of the received packet with the sending time of the last received packet;
if the sending time of the received packet is greater than the sending time of the last received packet,
replacing the sending time of the last received packet with the sending time of the received packet;
replacing the number of the last received packet with the number of the received packet;
entering the number of the received packet into the list of serial numbers of previously received packets;
accepting the packet;
if the sending time of the received packet is not greater than the sending time of the last received packet,
comparing the number of the last received packet with the number of the received packet;
if the number of the last received packet is less than number of the received packet,
replacing the number of the last received packet with the number of the received packet;
entering the number of the received packet into the list of serial numbers of previously received packets;
accepting the packet;
if the number of the last received packet is greater than or equal to the number of the received packet,
searching for the number of the received packet in the list of serial numbers of previously received packets;
if the number of the received packet has been found in the list of serial numbers of the previously received packets, then discarding the received packet;
if the number of the received packet has not been found in the list of serial numbers of previously received packets,
entering the number of the received packet into the list of serial numbers of previously received packets, and
accepting the received packet.
